# EUROPÄISCHE PATENTANMELDUNG

(11) **EP 1 326 174 A2**
(43) Veröffentlichungstag der Anmeldung: **09.07.2003**
(21) Anmeldenummer: 02027166.4
(22) Anmeldetag: 05.12.2002
(51) Int. Cl.: G06F 17/24

(54) **Verfahren und System zum Erzeugen einer produktbezogenen Darstellung**

(30) Priorität: 22.12.2001 DE 10163898
(71) Anmelder: ABB Research Ltd., 8050 Zürich (CH)
(72) Erfinder: Schellhammer, Wolfgang, Dr., 69117 Heidelberg (DE); Karandikar, Harsh, Dr., 69115 Heidelberg (DE)
(74) Vertreter: Miller, Toivo

(57) **Zusammenfassung**

Die Erfindung betrifft ein Verfahren zum Überführen einer ersten Darstellung (130, 240) eines Produktes mit einem ersten Satz von Merkmalen in eine zweite Darstellung (523, 524) eines Produktes mit einem zweiten Satz von Merkmalen mit den Schritten: Erstellen von Kommentaren zu Merkmalen des ersten Satzes, Zuordnen der Kommentare zu Merkmalen des ersten Satzes und Strukturieren der mit Kommentaren versehenen ersten Darstellung (130, 240), so dass die zweite Darstellung (523, 524) erzeugt wird.

Erfindungsgemäß ist vorgesehen, dass das Strukturieren auf der Grundlage von Strukturierungsvorlagen (540) und Strukturierungsregeln (541) unter Verwendung eines Datenprozessors (520) erfolgt. Die Erfindung betrifft weiterhin ein System zum Durchführen eines erfindungsgemäßen Verfahrens.

## Beschreibung

Die Erfindung betrifft ein Verfahren zum Überführen einer ersten Darstellung eines Produktes mit einem ersten Satz von Merkmalen in eine Zweite Darstellung eines Produktes mit einem zweiten Satz von Merkmalen mit den Schritten
- Erstellen von Kommentaren zu Merkmalen des ersten Satzes,
- Zuordnen der Kommentare zu Merkmalen des ersten Satzes und
- Strukturieren der mit Kommentaren versehenen ersten Darstellung, so dass die zweite Darstellung erzeugt wird.

Weiterhin betrifft die Erfindung ein System zum Überführen einer ersten Darstellung eines Produktes mit einem ersten Satz von Merkmalen in eine zweite Darstellung eines Produktes mit einem zweiten Satz von Merkmalen mit
- Mitteln zum Erstellen von Kommentaren zu Merkmalen des ersten Satzes,
- Mitteln zum Zuordnen der Kommentare zu Merkmalen des ersten Satzes und
- Mitteln zum Strukturieren der mit Kommentaren versehenen ersten Darstellung, so dass die zweite Darstellung erzeugt wird.

Bei der Erstellung von Angeboten auf der Grundlage von Ausschreibungsunterlagen ist es häufig erforderlich, Anmerkungen beziehungsweise Kommentare zu den Ausschreibungsunterlagen zu erstellen. Bei diesem Prozess befinden sich die Ausschreibungsunterlagen in Auszügen bei mehreren an einem Ingenieurprozess beteiligten Personen. Die einzelnen Beteiligten erstellen die in ihren Aufgabenbereich fallenden Anmerkungen zu Produkteigenschaften, die vom Kunden gemäß den Ausschreibungsunterlagen gefordert werden. Die Anmerkungen werden in schriftlicher Form niedergelegt, so dass sie später bei der Angebotserstellung berücksichtigt werden können.

Bei dem Formulieren der Anmerkungen im Hinblick auf die Angebotserstellung sollen von den einzelnen beteiligten Personen die Besonderheiten des Produkteinsatzes (zum Beispiel Prozessparameter, Materialeigenschaften) erfasst werden. Diese sind dann mit den verfügbaren Eigenschaften von beispielsweise einem Grundprodukt zu vergleichen. Nachdem die Erstellung der Anmerkungen erfolgt ist, können dann die auftragspezifischen Besonderheiten auf der Grundlage dieser Anmerkungen hinsichtlich ihrer Machbarkeit und der Verfügbarkeit als Teil des Standardproduktes diskutiert werden ("Design Review").

Mit dem so gearteten derzeit praktizierten Prozess zur Erstellung von Angeboten auf der Grundlage von Ausschreibungsunterlagen sind Probleme verbunden. Zum einen findet der Prozess der Kommentierung der Ausschreibungsunterlagen papierbasiert statt. Dies ist grundsätzlich nachteilig, da eine papierbasierte Darstellung keine gute Grundlage für eine fortschrittliche Weiterverarbeitung der Kommentare bietet. Insbesondere ist die papierbasierte Darstellung auch im Hinblick darauf nachteilig, dass es sich bei der Erstellung der Anmerkungen in vielen Fällen um einen geographisch verteilten Prozess handelt; bei modernen Unternehmen befinden sich die für unterschiedliche Aspekte desselben Produktes zuständigen Ingenieurabteilungen mitunter an unterschiedlichen Orten der Welt.

Es ist demnach schwierig, die unterschiedlichen Ergebnisse der Kommentierung zusammenzuführen und letztlich eine Darstellung des mit der Ausschreibung geforderten Produktes zu erhalten, die sämtliche Anmerkungen der Ingenieurabteilungen berücksichtigt.

Um der Lösung dieser Probleme näher zu kommen, wurden bereits Dokumentenverwaltungssysteme vorgeschlagen, die die Angebotserstellung unterstützen. Allerdings endet diese Unterstützung mit der Unterstützung des Verwaltungsprozesses der Dokumente selbst. Dies hat zur Folge, dass es nur auf manuellem Wege möglich ist, die Anmerkungen zu extrahieren und hinsichtlich der Produkteigenschaften zu strukturieren und aufzubereiten.

Der Erfindung liegt die Aufgabe zugrunde, ein System und ein Verfahren zum Erzeugen einer produktbezogenen Darstellung zur Verfügung zu stellen, so dass die genannten Nachteile des Standes der Technik ausgeräumt werden, wobei insbesondere der Prozess des Erzeugens einer produktbezogenen Darstellung unter Berücksichtigung sämtlicher Anmerkungen sicherer, einfacher und schneller ablaufen soll.

Diese Aufgabe wird mit den Merkmalen der unabhängigen Ansprüche gelöst.

Vorteilhafte Ausführungsformen sind in den abhängigen Ansprüchen angegeben.

Die Erfindung baut auf den gattungsgemäßen Verfahren dadurch auf, dass das Strukturieren auf der Grundlage von Strukturierungsvorlagen und Strukturierungsregeln unter Verwendung eines Datenprozessors erfolgt. Auf diese Weise können Kommentare zu Merkmalen einer Produktdarstellung, die in elektronischer Form vorliegen, automatisch analysiert und strukturiert werden. Die Beschreibung beziehungsweise die Auswertung der Kommentare kann beispielsweise auf der Grundlage des XML-Datenformates erfolgen. Die verwendeten Vorlagen zur Erstellung der Anmerkungen beziehungsweise die Strukturierungsvorlagen, die beim Strukturierungs- und Analyseprozess verwendet werden, liegen vorzugsweise im DTD-Format vor. Auf diese Weise können zulässige Schemaausprägungen beziehungsweise XML-Datenstrukturen definiert werden. Für spezifische Märkte und Anwendungen werden vordefinierte XML-Vorlagen herangezogen. Diese werden über einen XML-Editor aus der DTD-Beschreibung generiert und in einer Vorlagendatenbank abgelegt. Auf diese Weise wird eine strukturierte Beschreibung und eine automatisierte Auswertung von Anmerkungen (Instanzen der Datentypen) und deren Metadaten (administrative Daten zur Verwaltung der Kommentare) ermöglicht.

Das erfindungsgemäße Verfahren ist in besonders vorteilhafter Weise dadurch weitergebildet, dass die Strukturierungsvorlagen in einer Kommentardatenbank gespeichert werden. Auf diese Weise kann der Datenprozessor auf der Grundlage der Kommunikation mit der Kommentardatenbank auf Strukturierungsvorlagen zugreifen und diese bei der Strukturierung verwenden.

Weiterhin ist es besonders nützlich, dass das Erstellen der Kommentare auf der Grundlage von Kommentierungsvorlagen erfolgt, die in einer Kommentardatenbank gespeichert sind. Somit kann auch beim Erstellen der Kommentare auf die Kommentardatenbank zugegriffen werden, so dass in Kombination mit der Bereitstellung von Strukturierungsvorlagen ein umfassender Einsatz der Kommentardatenbank realisiert ist.

Weiterhin ist das Verfahren besonders bevorzugt in der Weise fortgebildet, dass in einer Kommentardatenbank auf Produkteigenschaften bezogene Kommentare auf der Grundlage des Erstellens von Kommentaren gespeichert werden und dass beim Strukturieren Kommentare verwendet werden, die bereits in der Kommentardatenbank gespeichert sind. Während des Prozesses zum Erzeugen einer Produktdarstellung kann also immer wieder auf die Kommentardatenbank zugegriffen werden, sei es zum Speichern der erstellten Kommentare oder auch zum Verwenden der in der Kommentardatenbank gespeicherten Kommentare.

Ein besonders bevorzugtes Anwendungsbeispiel der vorliegenden Erfindung ist dadurch gegeben, dass die erste Darstellung des Produktes ein Ausschreibungsdokument ist. Die Angebotserstellungsprozesse des Standes der Technik werden auf diese Weise verbessert, da die papierbasierte Erstellung durch eine automatische Erstellung der Angebote ersetzt wird.

In diesem Zusammenhang ist es besonders vorteilhaft, dass die zweite Darstellung des Produktes eine kommentierte Produktstruktur sowie eine Kommentarliste umfasst. Diese Komponenten sind nützlich, um das der Ausschreibung entsprechende Produkt zu beschreiben und die einzelnen Merkmale des Produktes mit Kommentaren in Verbindung zu bringen, die mit den jeweiligen Merkmalen zusammenhängen.

Besonders nützlich ist es, dass beim Erstellen der Kommentare ein Anwender auf ein gespeichertes Ausschreibungsdokument zugreift. Das gespeicherte Ausschreibungsdokument kann ebenfalls in einer Datenbank an zentraler Stelle gespeichert sein, so dass unmittelbar nach dem Eingang von Ausschreibungsunterlagen, sei es in Papierform oder elektronisch, mit dem Angebotserstellungsprozess begonnen werden kann. Dies verschafft dem Ersteller des Angebots einen zeitlichen Vorteil im Vergleich zu Unternehmen, die Angebote unverändert ohne die erfindungsgemäße Zentralisierung erstellen.

Die Erfindung baut auf dem gattungsgemäßen System dadurch auf, dass das Strukturieren auf der Grundlage von Strukturierungsvorlagen und Strukturierungsregeln unter Verwendung eines Datenprozessors erfolgt. Auf diese Weise werden die Vorteile des erfindungsgemäßen Verfahrens auch im Rahmen eines Systems umgesetzt. Dies gilt ebenfalls für die nachfolgend angegebenen bevorzugten Ausführungsformen des erfindungsgemäßen Systems.

Dieses ist in besonders vorteilhafter Weise so weiter gebildet, dass die Strukturierungsvorlagen in einer Kommentardatenbank gespeichert sind.

Ebenfalls ist es nützlich, dass die Mittel zum Erstellen der Kommentare auf der Grundlage von Kommentierungsvorlagen arbeiten, die in der Kommentardatenbank gespeichert sind.

Ferner ist das System in vorteilhafter Weise dadurch weitergebildet, dass in der Kommentardatenbank auf Produkteigenschaften bezogene Kommentare auf der Grundlage des Erstellens von Kommentaren gespeichert werden und dass beim Strukturieren Kommentare verwendet werden, die bereits in der Kommentardatenbank gespeichert sind.

Das System arbeitet in besonders vorteilhafter Weise, wenn es so weitergebildet ist, dass die erste Darstellung des Produktes ein Ausschreibungsdokument ist.

Ebenfalls ist es nützlich, dass die zweite Darstellung des Produktes eine kommentierte Produktestruktur sowie eine Kommentarliste umfasst.

Der Erfindung liegt die Erkenntnis zu Grunde, dass Strukturierungs- und Aufbereitungsprozesse von Ausschreibungsunterlagen durchgängig rechnerunterstützt erfolgen können. Anmerkungen können produktbezogen klassifiziert, verwaltet und aufbereitet werden. Hierdurch ist eine automatisierte Auswertung möglich. Dies wird insbesondere dadurch in vorteilhafter Weise umgesetzt, dass eine produktbezogene Schema- und Datenbeschreibungssprache zur Verfügung gestellt wird. Im Rahmen der Erfindung werden strukturierte Methoden und Beschreibungsformate zur Verfügung gestellt, die an einem Arbeitsplatzrechner in einem lokalen Netzwerk auf der Basis von Verweisen (Hyperlinks) in einer standardisierten Darstellungskomponente, wie zum Beispiel einem Web-Browser, zugänglich gemacht werden.

Die Erfindung wird nun mit Bezug auf die begleitenden Zeichnungen anhand bevorzugter Ausführungsformen beispielhaft erläutert.

Dabei zeigt:
Figur 1 ein Diagramm zur Erläuterung eines erfindungsgemäßen Systems;
Figur 2 ein Diagramm zur Erläuterung eines erfindungsgemäßen Verfahrens; und
Figur 3 ein Diagramm zur Erläuterung eines erfindungsgemäßen Systems.

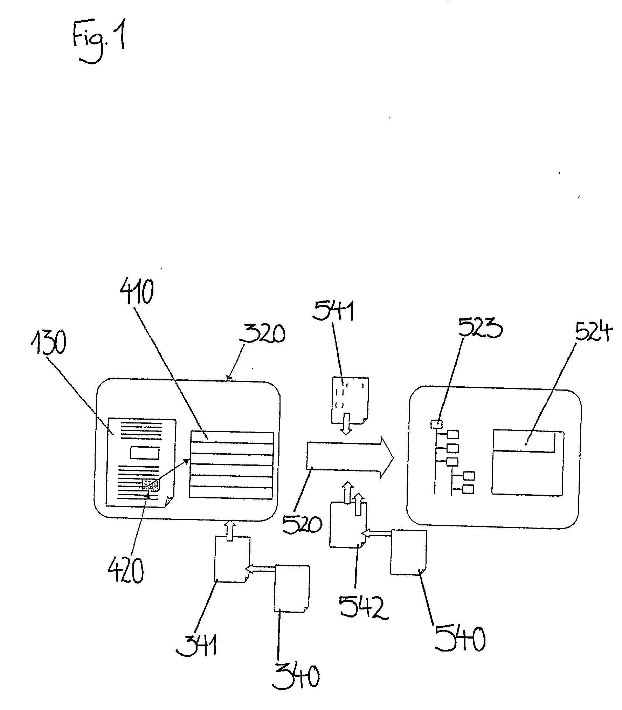

Figur 1 zeigt ein Diagramm zur Erläuterung eines erfindungsgemäßen Systems. Die von einem Kunden zur Verfügung gestellten Ausschreibungsunterlagen 130 liegen nach ihrer elektronischen Erfassung in elektronischer Form vor. Die Ausschreibungsunterlagen 130 werden in einem herkömmlichen Dokumentenverwaltungssystem verwaltet. Ein Benutzer ordnet zunächst in einem Schritt 320 den von dem Kunden erhaltenen Ausschreibungsunterlagen 130 eine anwendungsspezifische Kommentarvorlage 341 zu. Die anwendungsspezifische Kommentarvorlage 341 liegt im XML-Format (XML = "Extensible Markup Language") vor. Sie wird aus der anwendungsunabhängigen Kommentarvorlage 340 generiert, welche im DTD-Format (DTD = "Document Type Definition") vorliegt. Die ausgewählte anwendungsspezifische Kommentarvorlage wird beispielsweise in einem Web-Browser dargestellt 410. Die anwendungsspezifische Kommentarvorlage 341 enthält die wichtigsten Gesichtspunkte für die Angebotsbewertung und Verweise zur Produktdokumentation. Der Benutzer kann nun zu bestimmten gewünschten Produkteigenschaften Anmerkungen 420 erstellen. Diese Anmerkungen 420 stehen einerseits mit den Ausschreibungsunterlagen 130 in Beziehung, andererseits mit den Produkteigenschaften.

Nun kann mit Hilfe von Strukturierungsregeln 541 und unter Berücksichtigung einer Strukturierungssicht 542 durch einen Strukturierungs- und Analyseprozessor 520 eine Weiterverarbeitung erfolgen. Die Strukturierungssicht 542 liegt ebenfalls im XML-Format vor. Sie wird aus einer Strukturierungsvorlage 540 generiert welche im DTD-Format vorliegt. Die Strukturierungsvorlage 540 enthält ein plattformbasiertes Produktmodell.

Der Strukturierungs- und Analyseprozessor 520 setzt nun die gewünschten spezifischen Produkteigenschaften, welche durch die Anmerkungen beschrieben sind, mit dem plattformbasierten Produktmodell in Beziehung. Das Ergebnis ist eine produktbezogene Darstellung 523 der Anmerkungen zu der Ausschreibung. Ebenfalls lässt sich eine Kommentarliste 524 generieren. Diese Darstellung erfolgt rechnergestützt. Sämtliche Anmerkungen zur Ausschreibung werden von einem Rechner verwaltet.

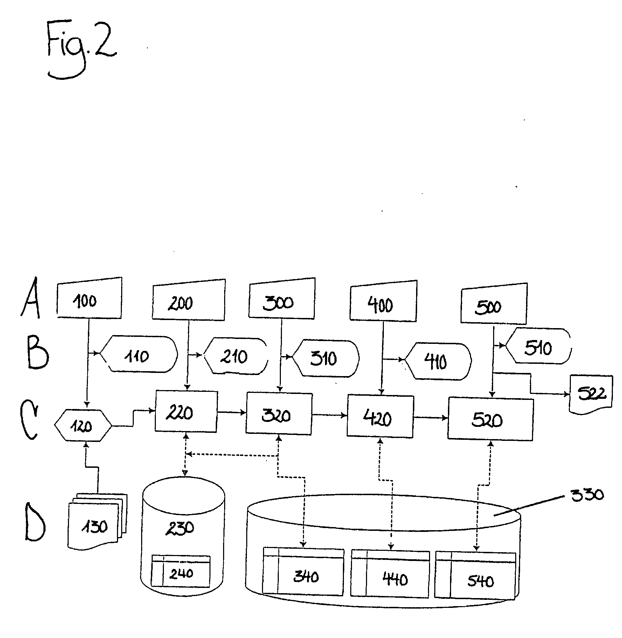

Figur 2 zeigt ein Diagramm zur Erläuterung eines erfindungsgemäßen Verfahrens. In dem Diagramm kennzeichnen Pfeile mit durchgezogenen Linien einen Informationsfluss, solche mit unterbrochenen Linien einen Datenzugriff.

Jeder der Verfahrensschritte wird durch eine Dateneingabemöglichkeit unterstützt, beispielsweise über eine Tastatur (oberste Zeile A). Ferner existiert eine Darstellungsmöglichkeit, zum Beispiel auf einem Bildschirm in einem Darstellungsfenster (zweite Zeile B). Weiterhin gibt es zu jedem Verfahrensschritt eine funktionale Softwarekomponente (dritte Zeile C), welche die eingegeben Daten in einem zugehörigen Datenformat abspeichert und verwaltet (vierte Zeile D).

Zunächst werden die als Papiervorlage oder als elektronisches Dokument eingehenden Ausschreibungsunterlagen 130 erfasst. Dies erfolgt durch eine Komponente 120, beispielsweise einen Scanner oder ein CD-Rom Laufwerk. In Folge liegen die Ausschreibungsunterlagen 130 in einem elektronischen Datenformat vor. Der Bediener kann nun zum Zweck der Angebotsdefinition 100 auf einem Bildschirm das erfasste Dokument einsehen 110.

Nachfolgend werden die administrativen Daten der zu kommentierenden Dokumente erfasst und verwaltet. Ein Datenpool, der aus Angebotsunterlagen 230 und Ausschreibungsunterlagen 240 besteht, wird von einer Unterlagenverwaltung 220 verwaltet. So ist es dem Bediener möglich eine Dokumentenstruktur der erfassten Dokumente zum Zweck der Dokumentenverwaltung 200 auf seinem Bildschirm zu erkennen 210.

Danach werden den erfassten Dokumenten die Kommentierungsvorlagen zugeordnet. Der Bediener wählt eine geeignete Vorlage aus 300 und sieht dabei die Vorlagenauswahl auf seinem Bildschirm 310. Die ausgewählte Vorlage wird von einer Softwareeinheit 320 aus einem Pool von Kommentierungsvorlagen 340 ausgewählt. Die Kommentierungsvorlagen 340 sind Teil einer Kommentardatenbank 330. Durch einen Datenzugriff auf die Angebotsunterlagen 230 beziehungsweise die Unterlagenverwaltung 220 ist gewährleistet, dass die Kommentierungsvorlage mit den Angebotsunterlagen 230 sowie den Ausschreibungsunterlagen 240 in Bezug steht.

Der nachfolgende Teil des Verfahrens unterstützt die merkmalsbezogene Kommentareingabe. Der Bediener gibt einen Kommentar 400 ein und sieht seine Eingabe auf dem Bildschirm 410. Eine Softwareeinheit 420 legt den auf eine Produkteigenschaft bezogenen Kommentar in einem Datenpool 440 ab, der Teil der Kommentardatenbank 330 ist.

Im weiteren Verfahrensablauf findet die auftragsunabhängige Umsetzung und Zuordnung der erfassten anwendungsspezifischen Anmerkungen zum Produktmodell statt. Der Bediener gibt den Befehl zur Kommentarauswertung 500 und sieht das Ergebnis der Auswertung auf seinem Bildschirm 510. Er hat ebenfalls die Möglichkeit die Bildschirmsicht als Report 522 auszugeben. Die aufbereiteten Daten werden von einem Auswertungsprozessor 520 nach entsprechend vorgegebenen Strukturierungs- und Darstellungsregeln aus der Kommentardatenbank 330 entnommen und entsprechend einer Strukturierungsvorlage 540 dargestellt.

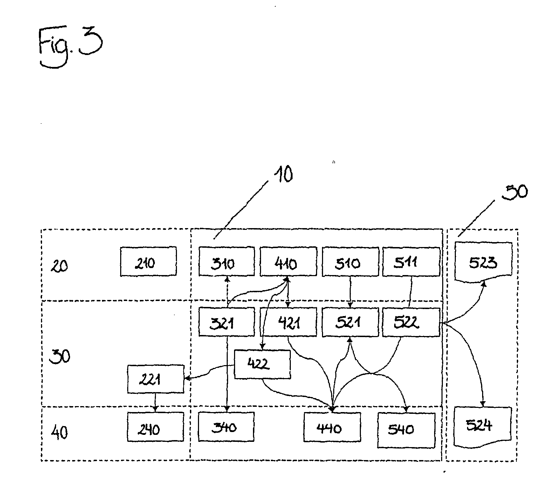

Figur 3 zeigt ein Diagramm zur Erläuterung eines erfindungsgemäßen Systems.

Die oberste Ebene 20 enthält die darstellungsrelevanten Komponenten. Die mittlere Ebene 30 beinhaltet die Systemkomponenten zur Datenverarbeitung. Die unterste Ebene 40 stellt die Komponenten zur Datenspeicherung dar. Auf der rechten Seite von Figur 3 ist eine Druckausgabe 50 als beispielhafte Ausgabemöglichkeit dargestellt. Im Systemblock 10 sind die Komponenten des erfinderischen Systems dargestellt.

Um eine Dokumentendarstellung 210 zu erhalten, muss der Dokumenteneditor 221 das Ausschreibungsdokument 240 speichern. Nach Auswahl einer geeigneten Vorlage 310 greift der Vorlagengenerierer 321 auf das Vorlagenschema 340 zu. Der Vorlagengenerierer 321 stellt den Kommentar-Eingabe-Dialog 410 zur Verfügung. Eine Kommentareingabe 410 wird in einem Eigenschaftseditor 421 mit den Produkteigenschaften in Bezug gesetzt und in einer Kommentardatenbank 440 gespeichert. Die gleiche Kommentareingabe wird in einem Eigenschaftsreferenzierer 422 mit dem Dokumenteneditor 221 verbunden und erst dann in der Kommentardatenbank 440 abgelegt. So ist die Anmerkung auch mit dem Ausschreibungsdokument 240 in Bezug gesetzt. Nach einer Strukturierungsauswahl 510 greift ein Strukturierungsprozessor 521 auf die Kommentardatenbank 440 zu. Mit Hilfe des Strukturierungsschemas 540 wird eine Strukturierungsdarstellung 511 erzeugt. Ein mit der Strukturierungsdarstellung 511 verbundener Reportgenerator 522 bietet die Möglichkeit, zum einen eine kommentierte Produktstruktur 523 und zum anderen eine Kommentarliste 524 auszudrucken. Da der Reportgenerator 522 auch mit der Kommentardatenbank 440 verbunden ist, lässt sich der Report nach dem Drucken in der Kommentardatenbank 440 speichern. Diese Speicherung ist auch ohne vorherigen Druckvorgang möglich.

Die vorhergehende Beschreibung der Ausführungsbeispiele gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihre Äquivalente zu verlassen.

### Bezugszeichenliste

- 10: Systemblock
- 20: oberste Ebene
- 30: mittlere Ebene
- 40: unterste Ebene
- 50: Druckausgabe
- 100: Angebotsdefinition
- 110: Visualisierung erfasster Dokumente
- 120: Erfassung
- 130: Ausschreibungsunterlagen
- 200: Dokumentenverwaltung
- 210: Bildschirm, Dokumentendarstellung
- 220: Unterlagenverwaltung
- 221: Dokumenteneditor
- 230: Verwaltung von Angebotsunterlagen
- 240: Ausschreibungsunterlagen
- 300: Auswahl der Vorlage
- 310: Bildschirm, Vorlage
- 320: Zuordnung einer Kommentierungsvorlage
- 321: Vorlagengenerierer
- 330: Kommentardatenbank
- 340: Kommentierungsvorlagen
- 341: anwendungsspezifische Kommentarvorlage
- 400: Kommentar
- 410: Visualisierung der Kommentare
- 420: Anmerkungen
- 421: Eigenschaftseditor
- 422: Eigenschaftsreferenzierer
- 440: Datenpool, Kommentardatenbank
- 500: Kommentarverwaltung und -auswertung
- 510: Bildschirm, Strukturierungsauswahl
- 511: Strukturierungsdarstellung
- 520: Analyseprozessor, Auswertungsprozessor
- 521: Strukturierungsprozessor
- 522: Report, Reportgenerator
- 523: Produktbezogene Darstellung
- 524: Kommentarliste
- 540: Strukturierungsvorlage, Strukturierungsschema
- 541: Strukturierungsregeln
- 542: Strukturierungssicht

## Patentansprüche

1. Verfahren zum Überführen einer ersten Darstellung (130, 240) eines Produktes mit einem ersten Satz von Merkmalen in eine zweite Darstellung (523, 524) eines Produktes mit einem zweiten Satz von Merkmalen mit den Schritten
- Erstellen von Kommentaren zu Merkmalen des ersten Satzes,
- Zuordnen der Kommentare zu Merkmalen des ersten Satzes und
- Strukturieren der mit Kommentaren versehenen ersten Darstellung (130, 240), so dass die zweite Darstellung (523, 524) erzeugt wird,
**dadurch gekennzeichnet, dass** das Strukturieren auf der Grundlage von Strukturierungsvorlagen (540) und Strukturierungsregeln (541) unter Verwendung eines Datenprozessors (520) erfolgt.

2. Verfahren nach Anspruch 1, **dadurch gekennzeichnet, dass** die Strukturierungsvorlagen (540) in einer Kommentardatenbank (330) gespeichert werden.

3. Verfahren nach Anspruch 1 oder 2, **dadurch gekennzeichnet, dass** das Erstellen der Kommentare auf der Grundlage von Kommentierungsvorlagen (340) erfolgt, die in einer Kommentardatenbank (330) gespeichert sind.

4. Verfahren nach einem der vorangehenden Ansprüche, **dadurch gekennzeichnet,**
- **dass** in einer Kommentardatenbank (330) auf Produkteigenschaften bezogene Kommentare (440) auf der Grundlage des Erstellens von Kommentaren gespeichert werden und
- **dass** beim Strukturieren Kommentare (440) verwendet werden, die bereits in der Kommentardatenbank (330) gespeichert sind.

5. Verfahren nach einem der vorangehenden Ansprüche, **dadurch gekennzeichnet, dass** die erste Darstellung des Produktes ein Ausschreibungsdokument (130, 240) ist.

6. Verfahren nach einem der vorangehenden Ansprüche, **dadurch gekennzeichnet, dass** die zweite Darstellung des Produktes eine kommentierte Produktstruktur (523) sowie eine Kommentarliste (524) umfasst.

7. Verfahren nach Anspruch 5 oder 6, **dadurch gekennzeichnet, dass** beim Erstellen der Kommentare ein Anwender auf ein gespeichertes Ausschreibungsdokument (240) zugreift.

8. System zum Überführen einer ersten Darstellung (130, 240) eines Produktes mit einem ersten Satz von Merkmalen in eine zweite Darstellung (523, 524) eines Produktes mit einem zweiten Satz von Merkmalen mit
- Mitteln (340, 341) zum Erstellen von Kommentaren zu Merkmalen des ersten Satzes,
- Mitteln (320) zum Zuordnen der Kommentare zu Merkmalen des ersten Satzes und
- Mitteln (520, 540, 541, 542) zum Strukturieren der mit Kommentaren versehenen ersten Darstellung (130, 240), so dass die zweite Darstellung (523, 524) erzeugt wird,
**dadurch gekennzeichnet, dass** das Strukturieren auf der Grundlage von Strukturierungsvorlagen (540) und Strukturierungsregeln (541) unter Verwendung eines Datenprozessors (520) erfolgt.

9. System nach Anspruch 8, **dadurch gekennzeichnet, dass** die Strukturierungsvorlagen (540) in einer Kommentardatenbank (330) gespeichert sind.

10. System nach Anspruch 8 oder 9, **dadurch gekennzeichnet, dass** die Mittel (340, 341) zum Erstellen der Kommentare auf der Grundlage von Kommentierungsvorlagen (340) arbeiten, die in der Kommentardatenbank gespeichert sind.

11. System nach einem der Ansprüche 8 bis 10, **dadurch gekennzeichnet,**
- **dass** in der Kommentardatenbank (330) auf Produkteigenschaften bezogene Kommentare (440) auf der Grundlage des Erstellens von Kommentaren gespeichert werden und
- **dass** beim Strukturieren Kommentare (440) verwendet werden, die bereits in der Kommentardatenbank (330) gespeichert sind.

12. System nach einem der Ansprüche 8 bis 11, **dadurch gekennzeichnet, dass** die erste Darstellung des Produktes ein Ausschreibungsdokument (130, 240) ist.

13. System nach einem der Ansprüche 8 bis 12, **dadurch gekennzeichnet, dass** die zweite Darstellung des Produktes eine kommentierte Produktstruktur (523) sowie eine Kommentarliste (524) umfasst.
